# EUROPEAN PATENT APPLICATION

(11) **EP 4 722 781 A1**
(43) Date of publication of application: **08.04.2026**
(21) Application number: 23938196.5
(22) Date of filing: 24.10.2023
(51) Int. Cl.: G02B 13/00, G02B 27/01

(54) **PROJECTION LENS, VEHICLE-MOUNTED HUD, AND VEHICLE**

(30) Priority: 25.05.2023 CN 202310611142
(71) Applicant: Goertek Optical Technology Co., Ltd., Weifang, Shandong 261031 (CN)
(72) Inventor: ZHANG, Tingrui, Weifang, Shandong 261031 (CN); DAN, Kun, Weifang, Shandong 261031 (CN); ZHENG, Xiao, Weifang, Shandong 261031 (CN)
(74) Representative: Rau, Schneck & Hübner Patentanwälte Rechtsanwälte PartGmbB
(86) International application number: PCT/CN2023/126070
(87) International publication number: WO 2024/239528

(57) **Abstract**

Embodiments of the present disclosure provide a projection lens, a vehicle-mounted HUD and a vehicle. The projection lens includes a front lens group, a rear lens group and a stop from an object side toward an image side along the same optical axis, and the stop is located between the front lens group and the rear lens group; the front lens group includes a first lens group having a first lens and a second lens group having a second lens, the second lens is located between the first lens and the stop, and the rear lens group includes a cemented lens having at least two lenses; the first lens has negative optical power, and light exiting the first lens raises its height when it is incident on the second lens. The projection lenses of the embodiments of the present disclosure have excellent projection imaging performance.

## Description

### TECHNICAL FIELD

Embodiments of the present disclosure relate to the technical field of optical imaging, and more specifically to a projection lens, a vehicle-mounted HUD, and a vehicle.

### BACKGROUND

A Head-Up Display (HUD) system projects a virtual image of an image source several meters in front of the vehicle, displaying various types of information such as instrument readings, navigation, assisted driving, and autonomous driving data. This allows the driver to keep eyes on the road almost entirely while driving, significantly enhancing driving safety.

The core components of a HUD mainly include the PGU (Picture Generation Unit), which is used to generate images and control brightness. It is usually composed of a TFT system or a projection system. The projection system is divided into Digital Light Processing (DLP) projection, Laser Beam Scanning (LBS) projection, and Liquid Crystal on Silicon (LCOS) projection. Depending on the type of Picture Generation Units (PGUs), the projection lens also varies; that is, existing optical designs of projection lenes cannot be adapted to different types of PGUs, resulting in poor versatility thereof. Moreover, the usage environment inside the vehicle is relatively harsh. If the optical performance of the lens is poor, the imaging effect will be compromised, leading to a poor user experience.

### SUMMARY

An objective of the present disclosure is to provide new technical solution for a projection lens, a vehicle-mounted HUD and a vehicle, addressing the issues of poor optical performance of existing projection lenses and their inability to be compatible with different types of image sources.

In a first aspect, embodiments of the present disclosure provide a projection lens. The projection lens includes a front lens group, a rear lens group and a stop from an object side toward an image side along the same optical axis; wherein the stop is located between the front lens group and the rear lens group;
the front lens group includes a first lens group having a first lens and a second lens group having a second lens, the second lens is located between the first lens and the stop, and the rear lens group includes a cemented lens having at least two lenses;
wherein, the first lens has negative optical power, and light exiting the first lens raises its height when it is incident on the second lens.

Optionally, the first lens includes a first surface and a second surface, the second surface is close to the second lens, and a ratio of a radius of curvature R₁₂ of the second surface to an air gap A between the first lens group and the second lens group is: 4 < R₁₂/A < 7.

Optionally, the second lens includes a third surface and a fourth surface, the second surface of the first lens and the third surface of the second lens are adjacent and spaced apart; wherein the second surface is concave, and the radius of curvature R₁₂ of the second surface is -30 mm to -70 mm.

Optionally, an effective focal length of the projection lens is 17 mm to 28 mm.

Optionally, a clear aperture of the third surface is greater than the clear aperture of the second surface.

Optionally, the second lens group further comprises a third lens having a fifth surface and a sixth surface, the fifth surface is away from the stop, and the sixth surface is close to the stop.

Optionally, the front lens group further includes a third lens group having a fourth lens, and the fourth lens is located between the second lens group and the stop.

Optionally, a focal length of the fourth lens is F₄, a radius of curvature of the fourth lens is R₄, an aperture of the fourth lens is L₄, which satisfy: F₄ > 5R₄, and L₄/R₄ > 1.2.

Optionally, the fourth lens includes a seventh surface which is away from the stop and an eighth surface which is close to the stop;
wherein the seventh surface is convex, the eighth surface is concave, and a center of curvature of the eighth surface is close to a center of the stop.

Optionally, the rear lens group includes a fourth lens group, a fifth lens group, and a sixth lens group arranged in sequence.

Optionally, the cemented lens is located in the fourth lens group, the cemented lens includes a fifth lens, a sixth lens, and a seventh lens, and the center of curvature of each cemented surface among the fifth lens, the sixth lens, and the seventh lens are located on one side of the stop.

Optionally, the fifth lens group includes an eighth lens and a ninth lens, and optical powers of the eighth lens and the ninth lens are both positive; and
the sixth lens group includes a tenth lens.

Optionally, a focal length F_{front} of the front lens group is: F_{front} > 70 mm, and a focal length Fᵣₑₐᵣ of the rear lens group is: 12 mm ≤Fᵣₑₐᵣ ≤ 25 mm.

Optionally, the projection lens further includes a prism and an image generator, the prism and the image generator are sequentially located on one side of the rear lens group away from the stop, and a protective glass is provided between the prism and the image generator.

In a second aspect, embodiments of the present disclosure provides a vehicle-mounted HUD. The vehicle-mounted HUD includes the projection lens as described in the first aspect.

In a third aspect, embodiments of the present disclosure provides a vehicle. The vehicle includes the vehicle-mounted HUD as described in the second aspect.

The beneficial effects of the present disclosure are as follows:
Embodiments of the present disclosure provide a projection lens, which can be applied to a vehicle-mounted HUD and other vehicle-mounted projection fields. In the projection lens provided by the embodiment of the present disclosure, it includes a front lens group, a rear lens group, and a stop from an object side toward an image side along the same optical axis, with the stop located between the front lens group and the rear lens group. The front lens group includes a first lens group having a first lens and a second lens group having a second lens, and the second lens is located between the first lens and the stop. When light passes through the first lens and is incident on the second lens, the height of the light on the surface of the second lens increases. This design can effectively correct aberrations, improve the clarity of the projected image, and ensure that the entire projection lens has excellent projection imaging performance. Moreover, the projection lens provided by the embodiment of present disclosure can be compatible with various types of image sources, and the projection imaging effects are all excellent.

Other features and advantages of the present disclosure will become apparent from the following detailed description of exemplary embodiments of the present disclosure with reference to the accompanying drawings.

### BRIEF DESCRIPTION OF THE DRAWINGS

The drawings incorporated in and forming a part of the specification illustrate the embodiments of the present specification and, together with the description, are used to explain the principles of the present specification.
FIG. 1 is a schematic structural diagram of the projection lens provided by the embodiments of the present disclosure;
FIG. 2 is an optical path diagram of the projection lens provided by Embodiment 1 of the present disclosure;
FIG. 3 is a field curvature and distortion diagram of the projection lens provided by Embodiment 1 of the present disclosure;
FIG. 4 is an MTF curve diagram of the projection lens provided by Embodiment 1 of the present disclosure;
FIG. 5 is a defocused MTF diagram of the projection lens provided by Embodiment 1 of the present disclosure;
FIG. 6 is a depth of focus diagram of the projection lens provided by Embodiment 1 of the present disclosure;
FIG. 7 is a lateral chromatic aberration diagram of the projection lens provided by Embodiment 1 of the present disclosure;
FIG. 8 is an optical path diagram of the projection lens provided by Embodiment 2 of the present disclosure;
FIG. 9 is a field curvature and distortion diagram of the projection lens provided by Embodiment 2 of the present disclosure;
FIG. 10 is an MTF curve diagram of the projection lens provided by Embodiment 2 of the present disclosure;
FIG. 11 is a defocused MTF diagram of the projection lens provided by Embodiment 2 of the present disclosure;
FIG. 12 is a depth of focus diagram of the projection lens provided by Embodiment 2 of the present disclosure;
FIG. 13 is a lateral chromatic aberration diagram of the projection lens provided by Embodiment 2 of the present disclosure.

### Description of reference signs:

1, first lens; 101, first surface; 102, second surface; 2, second lens; 201, third surface; 202, fourth surface; 3, third lens; 301, fifth surface; 302, sixth surface; 4, fourth lens; 401, seventh surface; 402, eighth surface; 5, fifth lens; 6, sixth lens; 7, seventh lens; 8, eighth lens; 9, ninth lens; 10, tenth lens; 11, stop; 12, prism; 13, protective glass; 14, image generator.

### DETAILED DESCRIPTION

Various exemplary embodiments of the present disclosure will now be described in detail with reference to the accompanying drawings. It is to be noted that unless otherwise specified, the relative arrangements, numerical expressions and values of components and steps illustrated in the embodiments do not limit the scope of the present disclosure.

The description of at least one exemplary embodiment is for illustrative purpose only and in no way implies any restriction on the present disclosure, its application, or use.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. Once an item is defined in one drawing, further reference to it may be omitted in subsequent drawings.

According to one aspect of the embodiments of the present disclosure, a projection lens is provided, which can be applied to a vehicle-mounted projection device, such as a vehicle-mounted HUD, and other vehicle-mounted projection fields. The projection lens provided in the embodiments of the present disclosure has good optical performance and can satisfy the development needs of the vehicle-mounted projection device.

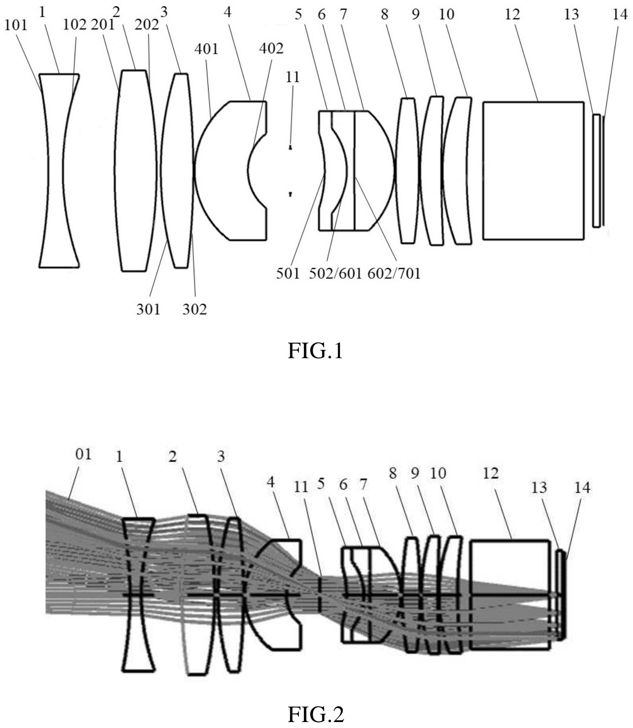

The projection lens provided in the embodiment of the present disclosure, as shown in FIG. 1, includes, from an object side toward an image side along the same optical axis, a front lens group, a rear lens group, and a stop 11; wherein, the stop 11 is located between the front lens group and the rear lens group.

The front lens group includes a first lens group having a first lens 1 and a second lens group having a second lens 2. The second lens 2 is located between the first lens 1 and the stop 11. The rear lens group includes a cemented lens having at least two lenses. The first lens 1 has negative optical power. Light exiting the first lens raises its height when it is incident on the second lens.

In the projection lens according to the above embodiments of the present disclosure, the stop 11 serves as a boundary dividing the lens into a front lens group and a rear lens group. The front lens group includes, for example, the first lens group and the second lens group mentioned above. The first lens group includes the first lens 1, and the second lens group includes the second lens 2. The first lens 1 is located on the side close to the object side, and the second lens 2 is positioned closer to the stop 11 than the first lens 1. It should be noted that the first lens group in the front lens group is not limited to including the first lens 1, and the second lens group is not limited to including the second lens 2; both may include other lenses, with no limitation here. The rear lens group includes a cemented lens having at least two lenses. That is to say, it can also include three lenses or even more than three lenses. Moreover, the rear lens group is not limited to the cemented lens and may also include other lens groups.

In the technical solution of the embodiments of the present disclosure, the first lens 1 is designed as a negative lens, that is, it has certain negative optical power. This design is adopted because it causes the light to diverge after passing through the first lens 1, thereby raising the height of the light when the light is incident on the second lens 2. In this way, it can correct aberrations in the projection imaging process and appropriately increase the FOV value of the optical module, thereby enhancing the user's sense of immersion.

Specifically, referring to the optical path diagram shown in FIG. 2, when the light exits the first lens 1 and then is incident on the second lens 2, the variation in the height of the light shows a clear trend: the height at the second surface 102 of the first lens 1 (the surface close to the second lens 2) is lower than the height at the third surface 201 of the second lens 2 (the surface close to the first lens 1). That is to say, as mentioned in the above embodiment, the height of the light exiting the first lens 1 increases when it is incident on the second lens 2. This design more effectively corrects aberrations, thereby improving the clarity of the projected image.

The projection lens provided by the embodiment of the present disclosure is applicable to fields such as vehicle-mounted applications and consumer goods. The projection lens provided by the embodiment of the present disclosure is not only suitable for DLP systems, but also for LCOS systems.

Specifically, the LCOS system has polarization characteristics, and only light with matching polarization can pass through, which has a relatively significant impact on light efficiency. The DLP system is a digital light processing system based on the spatial light modulator DMD (Digital Micromirror Device), in which each pixel acts as a small mirror. By instantaneously orienting the small mirror to one direction, light is directed through the lens to form a bright spot on the projection image plane; when the small mirror flips to the opposite direction, light is projected to another direction such that it completely misses the lens, forming a dark spot on the image plane. The frequency at which light passes through the lens represents the grayscale of that pixel. Since the pixel reflection does not require polarization characteristics, the light efficiency of a typical DLP system is generally higher than that of TFT and LCOS systems. The projection lens provided by the embodiment of the present disclosure is applicable to both DLP and LCOS systems, demonstrating good versatility.

The embodiment of the present disclosure provides a projection lens, which can be applied to fields such as vehicle-mounted HUD and other vehicle-mounted projection applications. In the projection lens provided by the embodiment of the present disclosure, when light passes through the first lens 1 and is incident on the second lens 2, the height of the light at the surface of the second lens 2 (specifically, the surface close to the first lens 1) increases. This design can more effectively correct aberrations, improve the clarity of the projected image, and thus provide the entire projection lens with better projection imaging performance. Moreover, the projection lens provided by the embodiment of the present disclosure can be compatible with various types of image sources, all demonstrating excellent projection imaging performance.

It should be noted that in the above embodiment of the present disclosure, the image side refers to the side where the light source of the projected image (or projection picture) is located during the projection process, such as the image generator 14 shown on the far right in Figures 1 and 2 (i.e., the image source, such as a display screen). The object side refers to the side where the projection image is formed on the projection surface, such as the far left in Figures 1 and 2.

Here, the stop 11 is for example an aperture stop. The stop 11 may be used to limit the diameter of the projection light passing through, adjust the luminous flux emitted from the projection lens, and simultaneously reduce the interference of stray light generated by the reflection of other lenses, thereby making the imaging of the projection light clearer.

Typically, the aperture of the stop 11 is a fixed value.

Of course, to flexibly adjust the clarity of the image and enable the projection lens to better adapt to switching between high and low resolutions, the stop 11 can also be set to allow adjustment of the aperture size.

According to the projection lens provided by the embodiments of the present disclosure, the projection light can be emitted from the image generator 14 shown on the right side of FIG. 1 (that is, the image source, such as a display screen), and can be emitted from the image side towards the object side. After passing through the rear lens group, the stop 11, and the front lens group in sequence, it is finally output to the projection surface on the object side, thereby presenting the projected image.

In the projection lens provided by the embodiments of the present disclosure, the image generator 14 may be disposed on the side of the rear lens group away from the stop 11 and can emit light for projection.

In the projection lens provided by the above embodiments of the present disclosure, the front lens group includes a first lens group having a first lens 1 and a second lens group having a second lens 2. The first lens 1 is located on the side close to the human eye 01, and the second lens 2 is located on the side close to the stop 11. There is a certain air gap A between the first lens group and the second lens group. By controlling the ratio of the radius of curvature R₁₂ of the second surface 102 of the first lens 1 to the air gap A within the range of 4 to 7 as described in the above embodiments, the projection lens can maintain a small volume while ensuring imaging quality and can also appropriately increase the field of view of the optical module.

In some examples of the present disclosure, as shown in FIG. 1, the first lens 1 includes the first surface 101 and the second surface 102, and the second lens 2 includes the third surface 201 and the fourth surface 202. The second surface 102 of the first lens 1 and the third surface 201 of the second lens 2 are adjacent and spaced apart. Here, the second surface 102 is concave, and the radius of curvature R₁₂ of the second surface 102 is -30mm to -70mm.

That is to say, in the projection lens provided by the embodiments of the present disclosure, the first lens 1 located on the object side is designed as a negative lens, which causes the light passing through the lens to diverge. A preferable approach is to design the second surface 102 of the first lens 1 as a concave surface with a relatively large degree of curvature, so as to ensure divergence of the light. The first surface 101 of the first lens 1 can be a flat surface, a convex surface, or a concave surface.

However, excessive divergence of the light may require a larger clear aperture for the subsequent second lens 2, which in turn could increase the physical size of the lens. This would adversely affect the volume and weight of the optical module, necessitating careful control. By controlling the radius of curvature R₁₂ of the second surface 102 within the range of -30mm to -70mm, the clear aperture value of the second lens 2 will not be too large while ensuring the quality of projection imaging.

According to the projection lens provided by the above embodiments of the present disclosure, since the height of the light exiting the first lens 1 and being incident on the second lens 2 increases, the field of view (that is, the FOV value) of the projection lens can be increased to a certain extent.

Optionally, when the second surface 102 of the first lens 1 is concave, the FOV value of the projection lens can be increased by 4° to 8°.

That is to say, the projection lens provided by the embodiments of the present disclosure can have a larger field of view, which can provide users with a better visual experience. According to the projection lens provided by the above embodiments of the present disclosure, the effective focal length of the projection lens is 17mm to 28mm.

According to the projection lens provided by the embodiments of the present disclosure, its optical structure is straightforward. The effective focal length of the entire projection lens is, for example, designed to be 17mm to 28mm. This allows the projection light to focus at a proper distance, which can improve the quality of the projected image.

Moreover, the range of the effective focal length mentioned above enables the projection lens to be suitable for vehicles. It can project a clear image at a suitable distance in front of the vehicle (for example, on the windshield), which can display various information such as vehicle speed and fuel gauge. This allows the driver to obtain various vehicle information through a clear virtual image without having to look down at the dashboard.

It should be noted that the effective range of the projection lens provided by the embodiments of the present disclosure can form a large-sized and clear projection image while ensuring the quality of projection imaging.

According to the projection lens provided by the embodiments of the present disclosure, as shown in FIG. 1, the first lens 1 includes the first surface 101 and the second surface 102, and the second lens 2 includes the third surface 201 and the fourth surface 202. The second surface 102 and the third surface 201 are adjacent and spaced apart, and a clear aperture of the third surface 201 is larger than that of the second surface 102.

It should be emphasized that in the projection lens, the clear aperture of the third surface 201 of the second lens 2 and the clear aperture of the second surface 102 of the first lens 1 refer to the part that participates in light imaging, not the physical size of the entire lens. Optionally, the ratio of the clear aperture A of the third surface 201 to the clear aperture B of the second surface 102 is: 1 < A/B ≤ 1.3.

In the projection lens provided by the embodiments of the present disclosure, the light exiting the first lens 1 is raised upon incidence on the second lens 2. To allow as much light as possible to be incident on the second lens 2 and improve light efficiency, the second lens 2 is made larger than the first lens 1. Specifically, the optical aperture B of the third surface 201 of the second lens 2 is larger than the optical aperture A of the second surface 102 of the first lens 1. For example, the aperture ratio between the two can be controlled within the above range. This can not only reasonably control the size of the first lens 1 and the second lens 2, thereby controlling the production cost, but also help to improve the quality of the projected image.

For example, the ratio of the optical aperture A of the third surface 201 to the optical aperture B of the second surface 102 is: 1.02, 1.05, or 1.1.

In addition, the second lens 2 is a biconvex lens.

In some examples of the present disclosure, as shown in FIG. 1, the second lens group further includes a third lens 3 having a fifth surface 301 and a sixth surface 302. The fifth surface 301 is away from the stop 11, and the sixth surface 302 is close to the stop 11. The third lens 3 is a biconvex lens or a plano-convex lens, and the effective focal length range of the second lens group is 22mm to 32mm.

In some examples of the present disclosure, as shown in FIG. 1, the front lens group further includes a third lens group having a fourth lens 4, and the fourth lens 4 is located between the second lens group and the stop 11. The fourth lens 4 is a meniscus lens, the focal length of the fourth lens 4 is F₄, the radius of curvature of the fourth lens 4 is R₄, and the aperture of the fourth lens 4 is L₄, satisfying: F₄ > 5R₄, L₄/R₄ > 1.2.

For example, as shown in FIG. 1, in the front lens group, the surface profile of the fourth lens 4 located on the left side of stop 11 is a convex-concave surface profile. At this time, the power of the fourth lens 4 can be positive or negative, which is not limited in the embodiments of the present disclosure.

According to the above example, the surface profile of the fourth lens 4 is a convex-concave surface profile, and the convex surface is relatively more convex, while the concave surface is designed to be relatively more concave, as shown in the fourth lens 4 in FIG. 1. This design is conducive to improving the quality of projection imaging.

In addition, the fourth lens 4 includes the seventh surface 401 which is away from the stop 11 and the eighth surface 402 which is close to the stop 11. Here, the seventh surface 401 is convex, the eighth surface 402 is concave, and the center of curvature of the eighth surface 402 is close to the center of the stop 11.

In the projection lens, the surface of the fourth lens 4 that is close to the stop 11 (that is, the eighth surface 402) is designed as a concave surface with a large curvature (highly concave). Its surface that is away from the stop 11 (that is, the seventh surface 401) is designed as a convex surface with a large curvature (highly convex). Meanwhile, in the present disclosure, the convex surface of the fourth lens 4 that is close to the stop 11 (that is, the seventh surface 401) is designed to be located near the center of the stop 11. In this case, the fourth lens 4 is equivalent to an aplanatic lens.

Introducing an aplanatic lens into the entire projection lens can effectively solve the problem of residual aberrations within the lens. Specifically, when the aplanatic lens is slightly offset from the position of the aplanatic point, it can generate aberrations that are similar in magnitude but opposite in sign to those of the original projection lens, thereby canceling out the aberrations of the original projection lens. This can significantly reduce residual aberrations, which is conducive to improving the optical performance of the projection lens.

In some examples of the present disclosure, the projection lens includes a front lens group, which includes a first lens group, a second lens group, and a third lens group. Referring to FIG. 1, the first lens 1 is located in the first lens group, the second lens 2 is located in the second lens group, and the third lens 3 is located in the third lens group.

Here, the front lens group includes the above-mentioned three lens groups, and the actual number of lenses in each lens group can be flexibly set according to needs, which is not limited in the embodiments of the present disclosure.

For example, the second lens group may include two lenses, that is, it has only the second lens 2. This is the basic structure of the projection lens and will not increase the production cost.

As another example, the second lens group may also include the second lens 2 and the third lens 3, or may include more than two lenses. Such a design can improve the performance of the entire projection lens.

It should be noted that the first lens group and the third lens group each include, but are not limited to, only one lens. The specific number can be adjusted according to the requirements for projection imaging quality. As the number of lenses in each lens group increases, the quality of projection imaging can be appropriately improved.

Optionally, the effective focal length of the first lens group is -29mm to -38mm, the effective focal length of the second lens group is -29mm to -38mm, and the effective focal length of the third lens group is -48mm to -60mm.

Optionally, the projection lens also includes a rear lens group, which includes the fourth lens group, the fifth lens group, and the sixth lens group arranged in sequence. The effective focal length of the fourth lens group is 50mm to 200mm, the effective focal length of the fifth lens group is 27mm to 45mm, and the effective focal length of the sixth lens group is 40mm to 120mm.

By controlling the effective focal lengths of each lens group in the front lens group and the rear lens group, it is conducive to controlling the effective focal length of the entire projection lens, enabling the projection light to focus at a proper distance, thereby enhancing the quality of the projected image.

In some examples of the present disclosure, as shown in FIG. 1, the cemented lens is located in the fourth lens group, and includes the fifth lens 5, the sixth lens 6, and the seventh lens 7. The centers of curvature of each cemented surfaces among the fifth lens 5, the sixth lens 6, and the seventh lens 7 is located on one side of the stop 11.

In the projection lens provided by the embodiments of the present disclosure, referring to FIG. 1 again, the fourth lens group is arranged on the right side of the stop 11. The fourth lens group includes three lenses, namely the fifth lens 5, the sixth lens 6, and the seventh lens 7 mentioned above. The fifth lens 5, the sixth lens 6, and the seventh lens 7 are cemented together. This design is conducive to reducing chromatic aberration, thereby improving the optical performance of the projection lens.

Specifically, the fourth lens group includes the fifth lens 5, the sixth lens 6, and the seventh lens 7 cemented together. The cemented surface between each pair of lenses is e.g. a curved surface, and the center of curvature of each cemented surfaces can be designed to be located on one side of the stop 11. This design can also eliminate aberrations to improve the quality of the final projection imaging.

Specifically, the fifth lens 5 is close to the stop 11, the seventh lens 7 is farther from the stop 11 than the fifth lens 5, and the sixth lens 6 is between the fifth lens 5 and the seventh lens 7. Here, the surface of the fifth lens 5 that is close to the stop 11 is concave, the cemented surfaces between the fifth lens 5, the sixth lens 6, and the seventh lens 7 are of a concave-convex or biconcave surface profile, and the surface of the seventh lens 7 that is away from the stop 11 is a convex surface. The ratio of the aperture L₇ of the seventh lens 7 to the radius of curvature R₇ of the seventh lens 7 satisfies: L₇/R₇<0.7. The advantage of this setting is that it can reduce the angle of incidence of the light, thereby reducing aberrations.

In some examples of the present disclosure, as shown in FIG. 1, the fifth lens group includes the eighth lens 8 and the ninth lens 9, and the optical power of both the eighth lens 8 and the ninth lens 9 is positive. The advantage of this setting is that multiple lenses share the power, thereby reducing aberrations. The eighth lens 8 is a biconvex lens, and the ninth lens 9 is a biconvex lens or a meniscus lens. The sixth lens group includes the tenth lens 10, which is a meniscus lens, a biconvex lens, or a plano-convex lens.

In addition, the optical performance of the projection lens can be improved by increasing the number of lenses in the fifth lens group and the sixth lens group.

It should be noted that in the optical path structure of the entire projection lens, the selection of the surface profiles of the lenses in the front lens group can further ensure the effective divergence of light in the front lens group. In the rear lens group of the projection lens, the surface profiles of the lenses in the fourth lens group, the fifth lens group, and the sixth lens group are properly designed so as to enable the converging projection light in the rear lens group to achieve the effect of proper distance projection. In this way, the cooperation of the front lens group and the rear lens group enables a clear image to be projected on the projection surface.

According to the projection lens provided by the embodiments of the present disclosure, it may include ten lenses, namely the first lens 1, the second lens 2, the third lens 3, the fourth lens 4, the fifth lens 5, the sixth lens 6, the seventh lens 7, the eighth lens 8, the ninth lens 9, and the tenth lens 10 shown in FIG. 1. The above ten lenses form the basic optical structure of the entire projection lens. That is to say, the projection lens provided by the embodiments of the present disclosure may be composed of ten lenses.

Here, for example, the lenses in the front lens group and the rear lens group may be glass lenses. Further, all the lenses may be spherical glass lenses.

Due to the cost advantage of glass material, this can reduce the manufacturing cost of the projection lens. Meanwhile, glass material also has the characteristic of being heat-resistant. The thermal distortion rate of glass material is low, and it has high stability. Therefore, the lenses in the optical path can be designed to be made of glass material. In particular, the lenses in the rear lens group close to the image source are made of glass material, thereby avoiding the impact of high temperature on the projection lens.

Of course, those skilled in the art can reasonably select the material of each lens in the projection lens according to specific needs, which is not limited in the embodiments of the present disclosure.

Optionally, the focal power of the first lens 1 is negative. The focal power of the second lens 2 is positive, and the focal power of the third lens 3 is positive.

Specifically, the first lens 1 is a biconcave lens, having negative focal power, which can cause the light exiting the first lens 1 to diverge.

Specifically, the second lens 2 is a biconvex lens, having positive focal power, which can converge the light.

In some examples of the present disclosure, the focal length of the front lens group F_{front} is: F_{front} > 70mm, and the focal length of the rear lens group Fᵣₑₐᵣ is: 12mm ≤ Fᵣₑₐᵣ ≤ 25mm.

Under the condition of ensuring the compact volume of the projection lens, the projected image can be made clear.

In some examples of the present disclosure, as shown in FIG. 1, the projection lens also includes a prism 12 and an image generator 14, which are located sequentially on the side of the rear lens group away from the stop 11. A protective glass 13 is provided between the prism 12 and the image generator 14.

For example, the image generator 14 includes an image source composed of DLP or LCOS. That is to say, the projection lens is not only applicable to DLP systems, but also to LCOS systems, and has strong versatility.

The projection lens provided by the present disclosure will be further introduced through Embodiment 1 and Embodiment 2.

### Embodiment 1

Referring to FIG. 2, the projection lens includes a front lens group, a rear lens group and a stop 11 from the object side toward the image side along the same optical axis; wherein, the stop 11 is located between the front lens group and the rear lens group.

The front lens group includes a first lens group, a second lens group, and a third lens group arranged in sequence. The first lens group has a first lens 1. The second lens group has a second lens 2 and a third lens 3, the focal power of the second lens 2 is positive, and the focal power of the third lens 3 is positive. The first lens 1 includes a first surface 101 and a second surface 102, and the second lens 2 includes a third surface 201 and a fourth surface 202. The light exiting the second surface 102 raises its height when it is incident on the third surface 201.

The focal power of the first lens 1 is negative, with a focal length range of - 25mm to -40mm. The second surface 102 is close to the second lens 2. A ratio of a radius of curvature R₁₂ of the second surface 102 to an air gap A between the first lens group and the second lens group (that is, an air gap between the first lens 1 and the second lens 2) satisfies: 1.5 < R₁₂/A < 3.3.

The second surface 102 and the third surface 201 are adjacent and spaced apart, and the clear aperture of the third surface 201 is larger than that of the second surface 102.

The third lens 3 includes a fifth surface 301 and a sixth surface 302, the fifth surface 301 is away from the stop 11, and the sixth surface 302 is close to the stop 11.

The third lens group has a fourth lens 4, which is a meniscus lens. The fourth lens 4 includes a seventh surface 401 and an eighth surface 402. The seventh surface 401 is away from the stop 11, and the eighth surface 402 is close to the stop 11. The seventh surface 401 is convex, and the eighth surface 402 is concave. The center of curvature of the eighth surface 402 is close to the center of the stop 11. The focal length of the fourth lens 4 is F₄, the radius of curvature of the fourth lens 4 is R₄, and the aperture of the fourth lens 4 is L₄, satisfying: F₄ > 5R₄, L₄/R₄ > 1.2.

The rear lens group includes a fourth lens group, a fifth lens group, and a sixth lens group arranged in sequence. The fourth lens group includes a fifth lens 5, a sixth lens 6, and a seventh lens 7. The fifth lens 5, the sixth lens 6, and the seventh lens 7 are cemented together to form a cemented lens group. The fifth lens group includes at least a eighth lens 8 and a ninth lens 9, and the focal powers of the eighth lens 8 and the ninth lens 9 are both positive. The sixth lens group includes a tenth lens 10.

The projection lens further includes a prism 12 and an image generator 14 which are located sequentially on the side of the rear lens group away from the stop 11. A protective glass 13 is provided between the prism 12 and the image generator 14.

For the above-mentioned Embodiment 1, the effective focal length of the projection lens is 22.8mm, the F-number is 2.4, the FOV is 41.8°, and the thickness of the prism 12 is 16mm.

Table 1 shows basic parameters of the optical design of the projection lens, including surface profile type, radius of curvature, lens center thickness, air gaps, material, and aperture.

**Table 1 basic parameters of the optical design**

| No. | Description | Surface type | Radius Of Curvature | Thickness | Optical Material (Nd; Vd) | Semi-aperture |
|---|---|---|---|---|---|---|
| OBJ | | Spherical Surface | Infinity | 135 | | 61.92 |
| S1 | first lens | Spherical Surface | -80.90 | 2.3 | 1.85; 23.8 | 15.43 |
| S2 | | Spherical Surface | 44.45 | 8.25 | | 11.45 |
| S3 | second lens | Spherical Surface | 109.76 | 6.68 | 1.76; 52.3 | 15.94 |
| S4 | | Spherical Surface | -74.71 | 0.67 | | 16.05 |
| S5 | third lens | Spherical Surface | 54.57 | 5.18 | 1.91; 35.3 | 15.49 |
| S6 | | Spherical Surface | -126.71 | 0.2 | | 15.07 |
| S7 | fourth lens | Spherical Surface | 13.77 | 8.48 | 1.83; 42.7 | 11.07 |
| S8 | | Spherical Surface | 7.529 | 6.77 | | 5.94 |
| STOP | | Spherical Surface | Infinity | 5.47 | | 3.51 |
| S9 | fifth lens | Spherical Surface | -19.94 | 5.93 | 1.73; 51.5 | 5.93 |
| S10 | sixth lens | Spherical Surface | -10.81 | 1.120 | 1.76; 27.5 | 6.80 |
| S11 | seventh lens | Spherical Surface | 2925.78 | 6.38 | 1.50; 81.6 | 8.39 |
| S12 | | Spherical Surface | -13.016 | 0.2 | | 9.55 |
| S13 | eighth lens | Spherical Surface | 69.58 | 3.69 | 1.62; 56.9 | 11.30 |
| S14 | | Spherical Surface | -89.99 | 0.2 | | 11.55 |
| S15 | ninth lens | Spherical Surface | -42.82 | 3.37 | 1.64; 55.4 | 11.87 |
| S16 | | Spherical Surface | 214.70 | 0.20 | | 11.78 |
| S17 | tenth lens | Spherical Surface | 33.34 | 3.823 | 1.62; 56.9 | 11.72 |
| S18 | | Spherical Surface | 83.69 | 2.65 | | 11.32 |
| S19 | prism | Spherical Surface | Infinity | 16 | 1.64; 55.4 | 10.98 |
| S20 | | Spherical Surface | Infinity | 1.5 | | 9.26 |
| S21 | protective glass | Spherical Surface | Infinity | 1.1 | 1.52; 64.2 | 8.99 |
| S22 | | Spherical Surface | Infinity | 0.51 | | 8.86 |
| IMAGE | Image Source | Spherical Surface | Infinity | - | | 8.77 |

It should be noted that in the above Table 1, the two surfaces of the first lens 1 are S1 and S2, which correspond to the first surface 101 and the second surface 102 in FIG. 1, respectively. The S3 and S4 correspond to the third surface 201 and the fourth surface 202 of the second lens 2, respectively, and so on. Details are omitted here for brevity. It is worth mentioning that S9 is the ninth surface 501 of the fifth lens 5, S10 is the cemented surface between the fifth lens 5 and the sixth lens 6 (the tenth surface 502 or the eleventh surface 601), and S11 is the cemented surface between the sixth lens 6 and the seventh lens 7 (the twelfth surface 602 or the thirteenth surface 701).

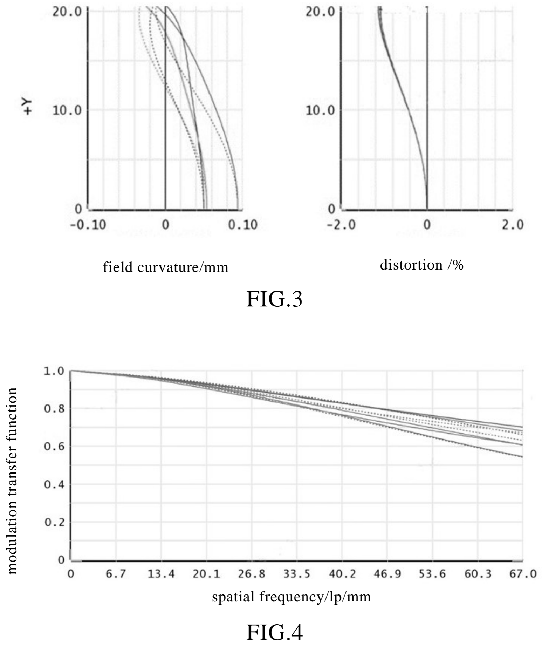

For the projection lens provided in the above-mentioned Embodiment 1, its optical performance is shown in Figures 3 to 7.

The distortion diagram reflects the difference in the image plane positions of clear images formed at different fields of view. Referring to the right side view in FIG. 3, the maximum distortion occurs at the 20° field of view, with an absolute value less than 1.21%. The field curvature diagram reflects the difference in the image plane positions of clear images formed at different fields of view. Referring to the left side view in FIG. 3, the maximum field curvature occurs near the maximum field of view, with a maximum value less than 0.08mm. It can be seen that both the field curvature and distortion of the projection lens are small, indicating good imaging quality.

The MTF curve diagram is a modulation transfer function diagram, which characterizes the imaging clarity of the near-eye display module through the contrast of black and white lines. Referring to FIG. 4, the MTF of the projection lens is greater than 0.52 under 67Lp/mm, indicating clear imaging.

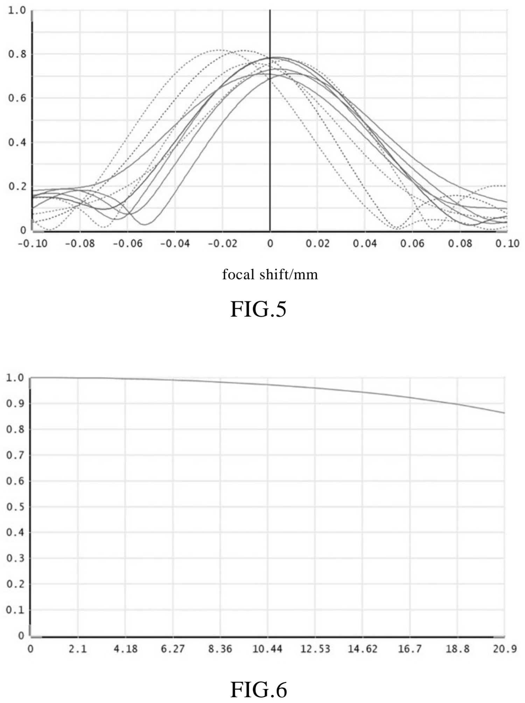

To balance the clarity of the image plane, defocus processing is done for small field of view. As shown in FIG. 5, from the defocused MTF diagram, it can be seen that with a defocus of ±0.02, the image quality does not significantly degrade, indicating that the projection lens has no significant requirements for the position of the image plane.

Referring to FIG. 6, FIG. 6 reflects the depth of focus, that is, the impact of the image plane (or the DMD for projection) moving back and forth along the optical axis on the projected image. It can be seen from FIG. 6 that the impact is not significant.

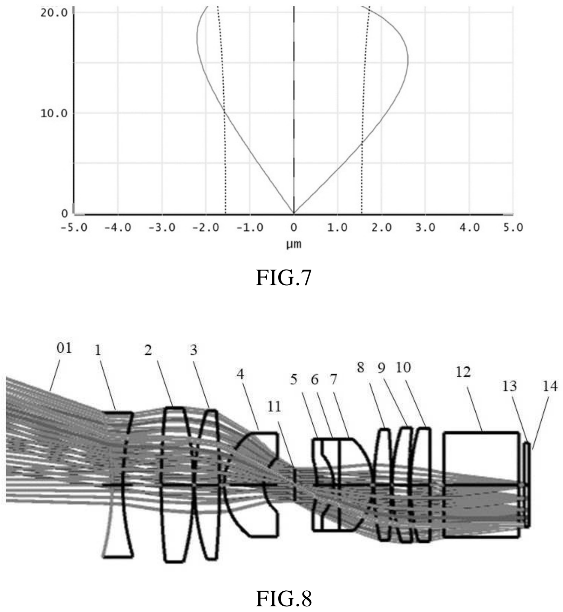

The lateral chromatic aberration, also known as magnification chromatic aberration, is shown in FIG. 7. The maximum chromatic aberration value of the projection lens is less than 4.8µm.

It can be seen that the projection lens provided in the above Embodiment 1 has good optical performance.

### Embodiment 2

The overall optical structure of the projection lens shown in Embodiment 2 is the same as that in Embodiment 1, and its optical structure and optical path diagram can be referred to in FIG. 8. The optical design parameters of the projection lens provided in Embodiment 2 are different from those in Embodiment 1, and can be referred to in the following Table 2.

Table 2 shows basic parameters of the optical design of the projection lens of Embodiment 2, including surface profile type, radius of curvature, lens center thickness, air gap, material, and aperture.

For Embodiment 2, the effective focal length of the projection lens is 23.3mm, the F-number is 2.4, the FOV is 42°, and the thickness of the prism 12 is 16mm.

**Table 2: basic parameters of the optical design**

| No. | Descriptio n | Surface type | Radius Of Curvature | Thickness | Optical Material (Nd; Vd) | Semi-aperture |
|---|---|---|---|---|---|---|
| OBJ | | Spherical Surface | Infinity | 135 | | 62.49 |
| S1 | first lens | Spherical Surface | -60 | 2.3 | 1.85; 23.8 | 15.52 |
| S2 | | Spherical Surface | 54.96 | 8.25 | | 15.20 |
| S3 | second lens | Spherical Surface | 154.06 | 6.93 | 1.76; 52.3 | 16.33 |
| S4 | | Spherical Surface | -63.71 | 0.2 | | 16.53 |
| S5 | third lens | Spherical Surface | 49.44 | 5.37 | 1.91; 35.3 | 15.93 |
| S6 | | Spherical Surface | -173.58 | 1.01 | | 15.47 |
| S7 | fourth lens | Spherical Surface | 13.70 | 8.54 | 1.83; 42.7 | 11.05 |
| S8 | | Spherical Surface | 7.467 | 6.54 | | 3.48 |
| STOP | | Spherical Surface | Infinity | 5.47 | | 3.51 |
| S9 | fifth lens | Spherical Surface | -19.197 | 3.61 | 1.73; 51.5 | 5.63 |
| S10 | sixth lens | Spherical Surface | -9.847 | 1.120 | 1.76; 27.5 | 6.5 |
| S11 | seventh lens | Spherical Surface | -6753.5 | 7.25 | 1.50; 81.6 | 8.13 |
| S12 | | Spherical Surface | -13366 | 0.2 | | 9.77 |
| S13 | eighth lens | Spherical Surface | 56.70 | 3.69 | 1.62; 56.9 | 11.71 |
| S14 | | Spherical Surface | -146.94 | 0.2 | | 11.94 |
| S15 | ninth lens | Spherical Surface | 39.12 | 3.61 | 1.64; 55.4 | 12.28 |
| S16 | | Spherical Surface | 121.87 | 0.305 | | 12.17 |
| S17 | tenth lens | Spherical Surface | 43.769 | 3.823 | 1.62; 56.9 | 12.14 |
| S18 | | Spherical Surface | Infinity | 3 | | 11.83 |
| S19 | prism | Spherical Surface | Infinity | 16 | 1.64; 55.4 | 11.22 |
| S20 | | Spherical Surface | Infinity | 1.5 | | 9.25 |
| S21 | protective glass | Spherical Surface | Infinity | 1.1 | 1.52; 64.2 | 8.01 |
| S22 | | Spherical Surface | Infinity | 0.51 | | 8.86 |
| IMAGE | Image Source | Spherical Surface | Infinity | - | | 8.77 |

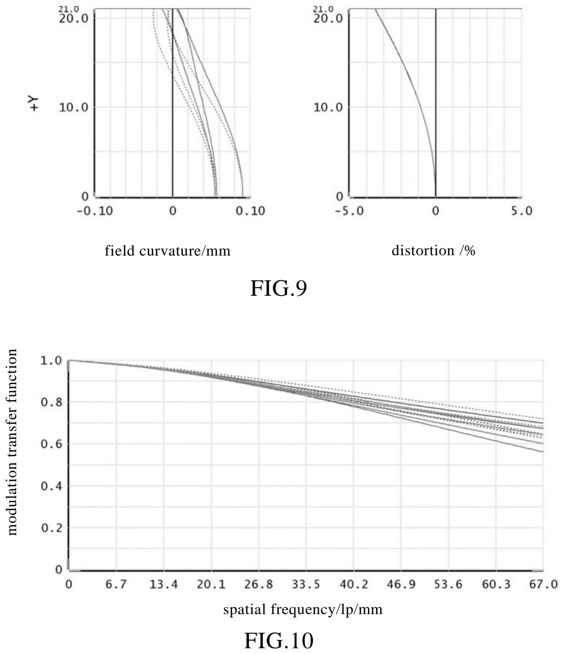

The distortion diagram reflects the difference in the image plane positions of clear images formed at different fields of view. Referring to the right side view in FIG. 9, the maximum distortion occurs at the maximum field of view, with an absolute value less than 3.5%. The field curvature diagram reflects the difference in the image plane positions of clear images formed at different fields of view. Referring to the left side view in FIG. 9, the maximum field curvature occurs near the maximum field of view, with a maximum value less than 0.07mm. It can be seen that both the field curvature and distortion of the projection lens are small, indicating good imaging quality.

The MTF curve diagram is a modulation transfer function diagram, which characterizes the imaging clarity of the near-eye display module through the contrast of black and white line pairs. Referring to FIG. 10, the MTF is greater than 0.5 under 671p/mm, indicating clear imaging.

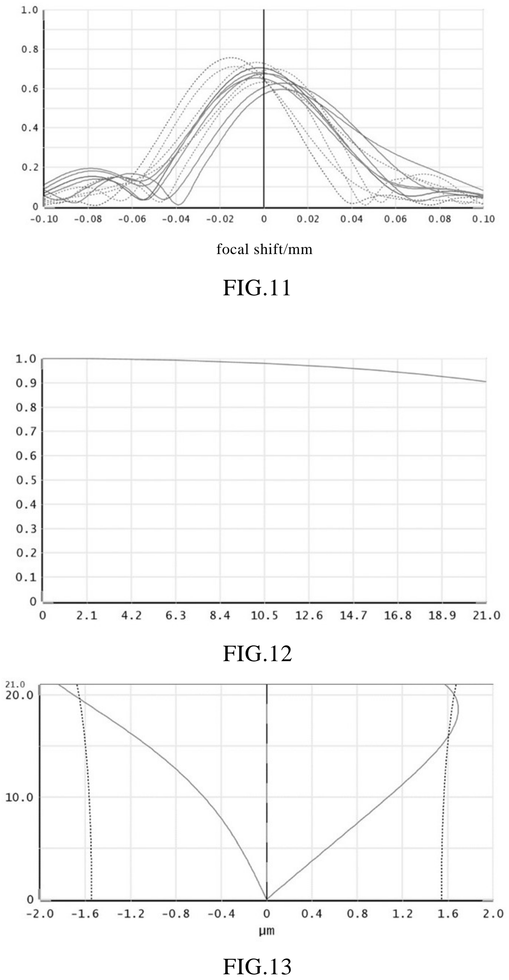

To balance the clarity of the image plane, defocus processing is done for small fields of view. As shown in FIG. 11, from the defocused MTF diagram, it can be seen that with a defocus of ±0.02, the MTF does not significantly degrade, indicating that the system projection lens is not sensitive to the position of the image plane.

Referring to FIG. 12, FIG. 12 reflects the depth of focus, that is, the impact of the image plane (or the DMD for projection) moving back and forth along the optical axis on the projected image. It can be seen from FIG. 12 that the impact is not significant.

Lateral chromatic aberration, also known as magnification chromatic aberration, is shown in FIG. 13. The maximum chromatic aberration value of the projection lens is less than 3.45µm.

It can be seen that the projection lens provided in the above Embodiment 2 has good optical performance.

According to another aspect of the embodiments of the present disclosure, a vehicle-mounted HUD is further provided. The vehicle-mounted HUD includes the projection lens as described above.

According to yet another aspect of the embodiments of the present disclosure, a vehicle is further provided. The vehicle includes the vehicle-mounted HUD as described above.

Here, the vehicle may be, for example, an electric vehicle or other types of vehicles.

The specific implementation of the vehicle-mounted HUD and the vehicle according to the embodiments of the present disclosure may refer to the above-mentioned embodiments of the projection lens, and thus at least have all the beneficial effects brought by the technical solutions of the above-mentioned embodiments. Therefore, they will not be described in detail here.

The preceding embodiments focus on describing the differences between each embodiment. The different optimizing features of each embodiment can be combined to form even more optimal embodiments as long as they do not conflict. For the sake of brevity, these combinations will not be elaborated upon here.

Although specific embodiments of the present disclosure have been described in detail through examples, those skilled in the art should understand that the above examples are for illustrative purposes only and are not intended to limit the scope of the present disclosure. Those skilled in the art should understand that the above embodiments can be modified without departing from the scope and spirit of the present disclosure. The scope of the present disclosure is defined by the appended claims.

## Claims

1. A projection lens, **characterized in that** the projection lens comprises a front lens group, a rear lens group and a stop (11) from an object side toward an image side along the same optical axis; wherein the stop (11) is located between the front lens group and the rear lens group;
the front lens group comprises a first lens group having a first lens (1) and a second lens group having a second lens (2), the second lens (2) is located between the first lens (1) and the stop (11), and the rear lens group comprises a cemented lens having at least two lenses;
wherein, the first lens (1) has negative optical power, and light exiting the first lens (1) raises its height when it is incident on the second lens (2).

2. The projection lens according to claim 1, **characterized in that**, the first lens (1) comprises a first surface (101) and a second surface (102), the second surface (102) is close to the second lens (2), and a ratio of a radius of curvature R₁₂ of the second surface (102) to an air gap A between the first lens group and the second lens group is: 4 < R₁₂/A < 7.

3. The projection lens according to claim 2, **characterized in that**, the second lens (2) comprises a third surface (201) and a fourth surface (202), the second surface (102) of the first lens (1) and the third surface (201) of the second lens (2) are adjacent and spaced apart; wherein the second surface (102) is concave, and the radius of curvature R₁₂ of the second surface (102) is -30 mm to -70 mm.

4. The projection lens according to claim 1, **characterized in that**, an effective focal length of the projection lens is 17 mm to 28 mm.

5. The projection lens according to claim 3, **characterized in that**, a clear aperture of the third surface (201) is greater than a clear aperture of the second surface (102).

6. The projection lens according to claim 1, **characterized in that**, the second lens group further comprises a third lens (3) having a fifth surface (301) and a sixth surface (302), the fifth surface (301) is away from the stop (11), and the sixth surface (302) is close to the stop (11).

7. The projection lens according to claim 1, **characterized in that**, the front lens group further comprises a third lens group having a fourth lens (4), and the fourth lens (4) is located between the second lens group and the stop (11).

8. The projection lens according to claim 7, **characterized in that**, a focal length of the fourth lens (4) is F₄, a radius of curvature of the fourth lens (4) is R₄, an aperture of the fourth lens (4) is L₄, which satisfy: F₄ > 5R₄, and L₄/R₄ > 1.2.

9. The projection lens according to claim 7, **characterized in that**, the fourth lens (4) comprises a seventh surface (401) which is away from the stop (11) and an eighth surface (402) which is close to the stop (11);
wherein, the seventh surface (401) is convex, the eighth surface (402) is concave, and a center of curvature of the eighth surface (402) is close to a center of the stop (11).

10. The projection lens according to any one of claims 1 to 8, **characterized in that**, the rear lens group comprises a fourth lens group, a fifth lens group, and a sixth lens group arranged in sequence.

11. The projection lens according to claim 10, **characterized in that**, the cemented lens is located in the fourth lens group, the cemented lens comprises a fifth lens (5), a sixth lens (6), and a seventh lens (7), and the centers of curvature of each cemented surface among the fifth lens (5), the sixth lens (6), and the seventh lens (7) is located on one side of the stop (11).

12. The projection lens according to claim 10, **characterized in that**, the fifth lens group comprises an eighth lens (8) and a ninth lens (9), and optical powers of the eighth lens (8) and the ninth lens (9) are both positive; and
the sixth lens group comprises a tenth lens (10).

13. The projection lens according to claim 1, **characterized in that**, a focal length F_{front} of the front lens group is: F_{front} > 70 mm, and a focal length Fᵣₑₐᵣ of the rear lens group is: 12 mm ≤ Fᵣₑₐᵣ ≤ 25 mm.

14. The projection lens according to claim 1, **characterized in that**, the projection lens further comprises a prism (12) and an image generator (14), the prism (12) and the image generator (14) are sequentially located on one side of the rear lens group away from the stop (11), and a protective glass (13) is provided between the prism (12) and the image generator (14).

15. A vehicle-mounted HUD, **characterized by** comprising the projection lens according to any one of claims 1 to 14.

16. A vehicle, **characterized by** comprising the vehicle-mounted HUD according to claim 15.
